# EUROPÄISCHE PATENTANMELDUNG

(11) **EP 2 264 979 A1**
(43) Veröffentlichungstag der Anmeldung: **22.12.2010**
(21) Anmeldenummer: 10160559.0
(22) Anmeldetag: 21.04.2010
(51) Int. Cl.: H04L 29/08, H04L 29/06

(54) **Verfahren zum Bereitstellen einer Knoten-ID in einem Peer-to-Peer-Netzwerk**

(30) Priorität: 15.06.2009 DE 102009024922
(71) Anmelder: Siemens Aktiengesellschaft, 80333 München (DE)
(72) Erfinder: Bußer, Jens-Uwe, 81739, München (DE); Seuschek, Hermann, 80634, München (DE)

(57) **Zusammenfassung**

Die Erfindung schafft ein Verfahren zum Bereitstellen mindestens einer gültigen Knoten-ID für einen bei einem Peer-to-Peer-Netzwerk (1) anzumeldenden Client-Rechner (2-8). Dabei wird aus einem Zertifikat (Z), das über eine Schnittstelle des anzumeldenden Clients (2-8) aus einem Authentifizierungs-Token ausgelesen wird, eine Knoten-ID des anzumeldenden Clients abgeleitet. Diese abgeleitete Knoten-ID wird anschließend von einem oder mehreren in dem Peer-to-Peer-Netzwerk (1) bereits vorhandenen Client-Rechner (2-i) als gültige Knoten-ID verifiziert, bevor der anzumeldende Client-Rechner (2-8) in das Peer-to-Peer-Netzwerk (1) eingefügt wird.

Das erfindungsgemäße Verfahren verwendet die Authentisierungsprüfung von plagiatgeschützten Gegenständen zur Ableitung einer Knoten-ID für ein Peer-to-Peer-Netzwerk (1) und bietet einen sicheren Schutz gegenüber bösartigen Anwendern, die durch gezielte Wahl von Knoten-IDs Kontrolle über Ressourcen des Peer-to-Peer-Netzwerkes (1) erlangen möchten.

## Beschreibung

Die Erfindung betrifft ein Verfahren zur Bereitstellung mindestens einer gültigen Knoten-ID für einen bei einem Peer-to-Peer-Netzwerk anzumeldenden Client.

Peer-to-Peer-Netzwerke werden aus gleichberechtigten Peer-Clients aufgebaut, die über ein Kommunikationsnetz, wie beispielsweise dem Internet, miteinander vernetzt sind. Im Gegensatz zu Client-Server-Netzwerken, bei denen Server bestimmte Dienste oder Funktionalitäten anbieten, die von Clients benutzt werden können, teilen sich in Peer-to-Peer-Netzwerken die beteiligten Peer-Clients insbesondere Hardware-Ressourcen, wie beispielsweise Rechenleistung, Speichermöglichkeiten, Netzwerkanbindung oder auch Druckeinrichtungen. In einem Peer-to-Peer-Netzwerk kann prinzipiell jeder Peer-Client mit jedem anderen Peer-Client, der an einem Peer-to-Peer-Netzwerk angeschlossen ist, kommunizieren und dessen Ressourcen nutzen. Ein Peer-to-Peer-Netzwerk ist daher dezentral organisiert. Bei einem Peer-to-Peer-Netzwerk ist es möglich, viele Peer-Clients ohne eine zentrale Einheit bzw. Server miteinander zu verbinden. Bestimmte Dienste, die in einer Client-Server-Architektur üblicherweise von einer zentralen Einheit übernommen werden, müssen dabei von den Peer-Clients selbst erbracht werden. Ein bedeutender Dienst ist dabei die Adressauflösung, d. h. die für das Kontaktieren eines bestimmten Peer-Clients notwendige Umsetzung von bekannten Daten des Anwenders, wie beispielsweise Anwendername oder Telefonnummer etc., in eine IP-Adresse des jeweiligen Gerätes.

Die Adressauflösung, d. h. das Ausfindigmachen einer Netzwerkadresse des durch eine Knotenadresse in dem Peer-to-Peer-Netzwerk charakterisierten angefragten Peer-Clients kann dynamisch über ein Routing-Protokoll erfolgen. Eine herkömmliche Möglichkeit besteht beispielsweise in der Verwendung einer verteilten Hash-Tabelle DHT (Distributed Hash Table). Dabei ist die Tabelle, welche jedem Peer-Client bzw. jeder Knotenadresse eine entsprechende Netzwerkadresse in dem übergeordneten Kommunikationsnetzwerk zuordnet auf alle beteiligten Peer-Clients in dem Peer-to-Peer-Netzwerk verteilt. Bei einer ringförmig organisierten Anordnung der Peer-Clients bzw. der Knotenadressen können die Peer-Clients beispielsweise eine Anzahl von benachbarten Peer-Clients bzw. Knotenadressen und deren Netzwerkadresse in einer lokalen Zuordnungs- oder Hash-Tabelle abspeichern. Der Knotenadressraum weist dabei eine Metrik auf, die die Abstände zwischen Peer-Clients bzw. Knotenadressen definiert. Ein bekannter Algorithmus zur Adressauflösung in einem ringförmig organisierten dezentralen Peer-to-Peer-Netzwerk ist beispielsweise der CHORD-Algorithmus, welcher in Ion Stoica, Robert Morris, David Karger, M. Frans Kaashoek, Hari Balakrishnan: "CHORD: A Scalable Peer-to-Peer Lookup Service For Internet Applications, MIT-LCS-TR-819" beschrieben ist.

Die Zuordnung einer Knotenadresse oder Knoten-ID (Node-ID) kann beispielsweise durch Anwendung einer Hash-Funktion auf einen Benutzernamen des betreffenden Peer-Clients oder des Dateinamens eines gesuchten Datenobjektes bestimmt werden. Jedem Peer-Client ist ein Bereich von Hash-Werten zugeordnet.

Eine Suche nach Daten oder Teilnehmern bzw. Peer-Clients wird durchgeführt, indem der anfragende oder suchende Peer den Hash-Wert des vorgegebenen Schlüsselwortes, wie beispielsweise Dateiname, Benutzername oder beispielsweise auch Telefonnummer berechnet. Um die Netzwerkadresse der sich durch das Hashen ergebenden zu suchenden Knoten-ID aufzufinden, sendet der anfragende Peer-Client eine Suchanfrage an einen anderen Peer-Client, der mit seiner Knotenadresse und zugehörigen Netzwerkadresse in einer Liste bekannter Peer-Clients, beispielsweise einer Nachbarliste und/oder Fingerliste des anfragenden Peer-Clients verzeichnet ist. Falls der angefragte Peer-Client für den gesuchten Hash-Wert zuständig ist, sendet er die angefragten Daten an den anfragenden Peer-Client über das übergeordnete Netzwerk.

Falls der zuerst angefragte Peer-Client nicht für den Hash-Wert zuständig ist, antwortet er mit der Adresse eines Peer-Clients aus seiner Peer-Liste dessen Knoten-ID zu dem gesuchten Hash-Wert ähnlicher ist als seine eigene Knotenadresse. Ob die eigene Knoten-ID mit der gesuchten Knoten-ID bzw. dem gesuchten Hash-Wert ähnlich ist, ergibt sich aus der verwendeten Metrik des Knotenadressraums. Der zuerst angefragte Peer-Client stellt somit dem anfragenden Peer-Client eine Knoten-ID und eine IP-Adresse bereit, die dem gesuchten Hash-Wert näher kommt. Der anfragende Peer-Client kann nun eine zweite Suchanfrage an denjenigen Peer-Client mit der näheren Knotenadresse senden. Dieses Verfahren wird weitergeführt bis ein Peer-Client gefunden wird, der für den Hash-Wert zuständig ist und die gesuchten Daten liefern kann.

Hat ein Anwender die Möglichkeit, eine Knoten-ID für sein Gerät bzw. seinen Peer-Client frei zu wählen, kann dieser Anwender auch darüber bestimmen, für welche Suchbegriffe bzw. Daten sein Gerät verantwortlich ist und mit welchen anderen Geräten sein Gerät in dem Peer-to-Peer-Netzwerk topologisch benachbart ist. Es werden in einem Peer-to-Peer-Netzwerk zwar Daten auf mehreren Peer-Clients abgelegt bzw. gespeichert, um trotz Fluktuationen in dem Peer-to-Peer-Netzwerk Datenverluste zu verhindern, aber es besteht dennoch die Gefahr, dass bei einer freien Wahl der Knoten-ID durch die Anwender ein bösartiger Anwender, der über mehrere Geräte bzw. Client-Rechner verfügt oder verschiedene bösartige Anwender, die jeweils über Client-Rechner verfügen, gezielt versuchen, eine vollständige Kontrolle über bestimmte Datensätze zu erlangen. Ein derartiger bösartiger Anwender bzw. mehrere bösartige Anwender können dann gezielt diese Datensätze verändern oder unterdrücken. Weiterhin besteht bei einer freien Wahl der Knoten-ID seitens der Anwender die Gefahr, dass ein bösartiger Anwender gezielt bestimmte Peer-Client bzw. Geräte anderer Anwender isoliert, die dann für Dritte nicht mehr erreichbar sind. Da herkömmliche Peer-to-Peer-Netzwerke in der Regel keine Zugangskontrolle durch Einschränkung der Wahl der jeweiligen Knoten-ID für den Peer-Client haben, kann jeder Anwender für sein Endgerät bzw. seinen anzumeldenden Peer-Client jederzeit eine beliebige Knoten-ID wählen und sich somit an entsprechender Stelle in das bestehende Peer-to-Peer-Netzwerk einfügen.

Es ist daher eine Aufgabe der vorliegenden Erfindung, ein Verfahren zum Bereitstellen einer gültigen Knoten-ID für einen bei einem Peer-to-Peer-Netzwerk anzumeldenden Client zu schaffen, das eine Zugangskontrolle bietet und Angriffsmöglichkeiten bösartiger Anwender auf Basis einer freien Wahl einer Knoten-ID verhindert.

Diese Aufgabe wird erfindungsgemäß durch ein Verfahren mit den im Patentanspruch 1 angegebenen Merkmalen gelöst.

Die Erfindung schafft ein Verfahren zum Bereitstellen mindestens einer gültigen Knoten-ID für einen bei einem Peer-to-Peer-Netzwerk anzumeldenden Client, wobei von einem Zertifikat, das über eine Schnittstelle des anzumeldenden Clients aus einem Authentifizierungs-Token ausgelesen wird, eine Knoten-ID des anzumeldenden Clients abgeleitet wird, die von einem oder mehreren der in dem Peer-to-Peer-Netzwerk vorhandenen Clients als gültige Knoten-ID verifiziert wird.

Bei einer Ausführungsform des erfindungsgemäßen Verfahrens wird die abgeleitete Knoten-ID des anzumeldenden Clients als gültig verifiziert, falls eine von mindestens einem vorhandenen Client des Peer-to-Peer-Netzwerkes generierte Challenge, die über die Schnittstelle des durch die abgeleitete Knoten-ID adressierten anzumeldenden Clients an das Authentifizierungstoken gesendet werden, einer zugehörigen Response entspricht, die der mindestens eine vorhandene Client über die Schnittstelle des durch die abgeleitete Knoten-ID adressierten anzumeldenden Clients empfängt.

Bei einer Ausführungsform des erfindungsgemäßen Verfahrens wird die Knoten-ID durch den anzumeldenden Client von dem aus dem Ableitungstoken ausgelesenen Zertifikat mittels einer vorgegebenen Ableitungsfunktion abgeleitet.

Bei einer Ausführungsform des erfindungsgemäßen Verfahrens überträgt der anzumeldende Client die abgeleitete Knoten-ID zusammen mit dem aus dem Authentifizierungstoken ausgelesenen Zertifikat an den mindestens einen bereits in dem Peer-to-Peer-Netzwerk vorhandenen Client zur Verifizierung der abgeleiteten Knoten-ID.

Bei einer Ausführungsform des erfindungsgemäßen Verfahrens überprüft der vorhandene Client zunächst eine Signatur des übertragenen Zertifikates mittels eines öffentlichen Schlüssels einer Zeritifizierungsinstanz zur Verifizierung des Zertifikates und anschließend leitet der vorhandene Client eine Knoten-ID mittels der vorgegebenen Ableitungsfunktion von dem verifizierten Zertifikat ab und vergleicht diese mit der von dem anzumeldenden Client übertragenen Knoten-ID, wobei die übertragene Knoten-ID als gültig verifiziert wird, falls die übertragene Knoten-ID mit der durch den vorhandenen Client selbst abgeleiteten Knoten-ID übereinstimmt.

Bei einer Ausführungsform des erfindungsgemäßen Verfahrens wird die Ableitungsfunktion durch eine Hash-Funktion gebildet.

Bei einer Ausführungsform des erfindungsgemäßen Verfahrens wird einem anzumeldenden Client und dem vorhandenen Client des Peer-to-Peer-Netzwerkes eine gemeinsame Ableitungsfunktion zur Verifizierung einer Knoten-ID des anzumeldenden Clients bereitgestellt.

Die Erfindung schafft ferner ein Peer-to-Peer-Netzwerk mit den im Patentanspruch 8 angegebenen Merkmalen.

Die Erfindung schafft ein Peer-to-Peer-Netzwerk, das einen oder mehrere Clients aufweist, wobei zur Erweiterung des Peer-to-Peer-Netzwerkes um einen weiteren Client diesem anzumeldenden Client mindestens eine gültige Knoten-ID für das Peer-to-Peer-Netzwerk bereitgestellt wird, indem eine Knoten-ID von einem Zertifikat, welches über eine drahtlose oder drahtgebundene Schnittstelle des anzumeldenden Clients aus einem Authentifizierungs-Token ausgelesen wird, abgeleitet wird und von dem einen oder mehreren in dem Peer-to-Peer-Netzwerk vorhandenen Clients als gültig verifiziert wird.

Bei einer Ausführungsform des Peer-to-Peer-Netzwerkes gemäß der Erfindung wird das Authentifizierungstoken durch ein RFID-Token oder durch ein Plagiatsschutztoken gebildet.

Bei einer Ausführungsform des erfindungsgemäßen Peer-to-Peer-Netzwerkes wird die Knoten-ID mittels einer Ableitungsfunktion abgeleitet, die in einem Speicher des jeweiligen vorhandenen Clients des Peer-to-Peer-Netzwerkes und in einem Speicher des anzumeldenden Clients gespeichert ist.

Bei einer Ausführungsform des erfindungsgemäßen Peer-to-Peer-Netzwerkes ist das zu authentifizierende Token an einem plagiatgeschützten Gegenstand angebracht oder darin integriert.

Bei einer Ausführungsform des erfindungsgemäßen Peer-to-Peer-Netzwerkes sind die Clients des Peer-to-Peer-Netzwerkes mobile Clients, insbesondere Laptops, PDA und Mobiltelefone.

Bei einer weiteren Ausführungsform des erfindungsgemäßen Peer-to-Peer-Netzwerkes sind die Clients immobile Clients, insbesondere Computer und Festtelefone.

Bei einer weiteren Ausführungsform des erfindungsgemäßen Peer-to-Peer-Netzwerkes weist dieses sowohl mobile als auch immobile Clients auf.

Die Erfindung schafft ferner ein Computerprogramm mit Programmbefehlen zur Durchführung eines Verfahrens zum Bereitstellen mindestens einer gültigen Knoten-ID für einen für ein Peer-to-Peer-Netzwerk anzumeldenden Client, wobei von einem Zertifikat, das über eine Schnittstelle des anzumeldenden Clients aus einem Authentifizierungs-Token ausgelesen wird, eine Knoten-ID des anzumeldenden Clients abgeleitet wird, die von einem oder mehreren der in dem Peer-to-Peer-Netzwerk vorhandenen Clients als gültige Knoten-ID verifiziert wird.

Die Erfindung schafft ferner einen Datenträger, der ein derartiges Computerprogramm speichert.

Im Weiteren werden Ausführungsformen des erfindungsgemäßen Verfahrens und des erfindungsgemäßen Peer-to-Peer-Netzwerkes unter Bezugnahme auf die beigefügten Figuren beschrieben.

Es zeigen:
- Figur 1: ein Diagramm zur Darstellung einer möglichen Ausführungsform des erfindungsgemäßen Peer-to-Peer-Netzwerkes;
- Figur 2: ein Signaldiagramm zur Erläuterung der Funktionsweise des erfindungsgemäßen Verfahrens zum Bereitstellen von mindestens einer gültigen Knoten-ID ein bei dem Peer-to-Peer-Netzwerk anzumeldenden Client.

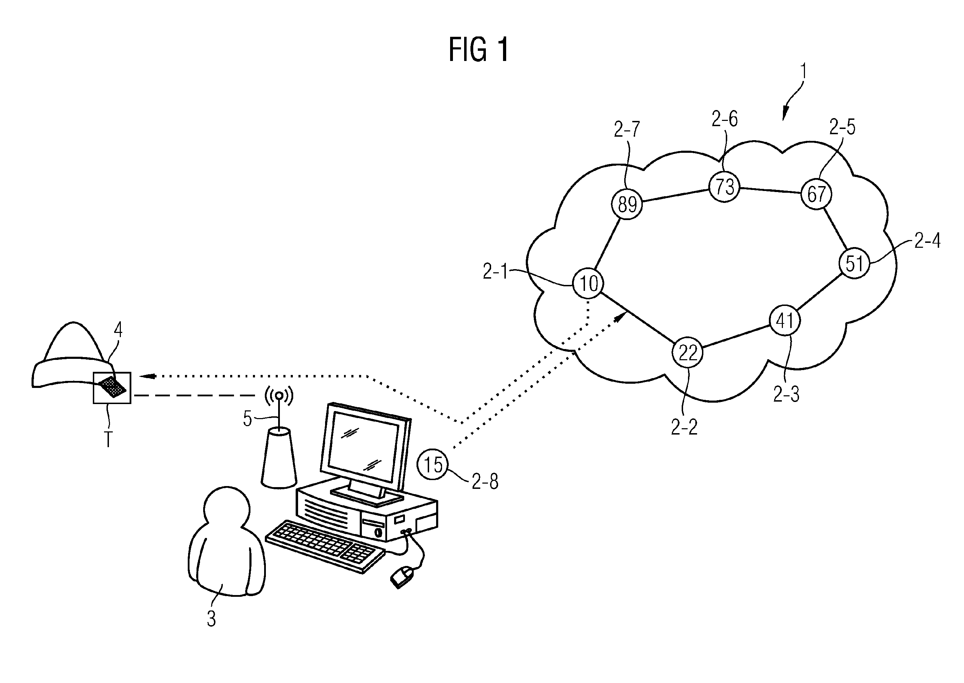

Wie man aus Figur 1 erkennen kann, besteht ein Peer-to-Peer-Netzwerk 1 gemäß der Erfindung aus einer Vielzahl von Peer-to-Peer-Clients 2-i. In dem in Figur 1 dargstellten Ausführungsbeispiel weist das Peer-to-Peer-Netzwerk 1 sieben Peer-Rechner 2-1 bis 2-7 auf, die logisch ringförmig organisiert sind. Die vorhandenen Peer-Clients 2-i des Peer-to-Peer-Netzwerkes 1 sind physikalisch über ein Kommunikationsnetzwerk, beispielsweise das Internet, verbunden. Jeder Peer-Client des Peer-to-Peer-Netzwerkes 1 weist eine Knoten-ID auf. In dem angegebenen Beispiel der Figur 1 sind die Knoten-IDs der Peer-Clients 2-i den Peer-Clients 2-1 bis 2-7 in einem logischen Ring aufsteigend zugeordnet bzw. zugewiesen. So weist beispielsweise der Peer-Client 2-1 eine Knoten-ID "10", der Peer-Client 2-2 eine Knoten-ID "22" und der Peer-Client 2-3 eine Knoten-ID "41" usw. auf. Der Peer-Client 2-7 weist die höchste Knoten-ID "89" in dem angegebenen Beispiel auf.

Wie in Figur 1 dargestellt, möchte ein Anwender 3 seinen Rechner bzw. seinen Client als weiteren Peer-Client 2-8 in das Peer-to-Peer-Netzwerk 1 einfügen. Dieser zusätzliche bzw. neue Client verfügt in dem in Figur 1 dargestellten Ausführungsbeispiel über eine Kommunikationsverbindung zu einem Authentifizierungstoken T, das beispielsweise an einem plagiatgeschützten Gegenstand 4 angebracht ist. Bei dem in Figur 1 dargestellten Beispiel ist der plagiatgeschützte Gegenstand eine Handtasche. Die Schnittstelle zwischen dem anzumeldenden Client-Rechner 2-8 des Anwenders 3 und dem Token T ist bei dem in Figur 1 dargestellten Ausführungsbeispiel eine Funkschnittstelle, die über eine drahtlose Verbindung einen drahtlosen Datenaustausch zwischen einer Leseeinheit 5 des anzumeldenden Client-Rechners 2-8 und dem Authentifizierungstoken T ermöglicht. Darüber hinaus verfügt der anzumeldende Client 2-8 über eine Datenverbindung zu dem Peer-to-Peer-Netzwerk 1, beispielsweise eine IP-Internetverbindung, eine WLAN-Verbindung oder eine Mobile-IP-Verbindung. Bei dem anzumeldenden Client-Rechner 2-8 kann es sich um ein mobiles Endgerät, beispielsweise einen Laptop, eine PDA oder um ein Mobiltelefon handeln. Bei dem anzumeldenden Client 2-8 kann es sich auch um ein immobiles bzw. Festgerät, insbesondere um einen PC oder ein Festtelefon handeln.

Das Authentifizierungstoken T kann an einem beliebigen plagiatgeschützten Gegenstand angebracht oder darin integriert sein. Bei dem Authentifizierungstoken T handelt es sich beispielsweise um ein RFID-Token oder um ein sonstiges plagiatgeschütztes Token bzw. einen Kryptochip. Dieser Kryptochip bzw. Authentifizierungschip kann in dem Gegenstand 4 integriert sein. Bei dem Gegenstand 4 kann es sich beispielsweise auch um ein elektronisches Gerät, beispielsweise einen mp3-Player, einen iPod oder um ein Mobiltelefon handeln. In diesem elektronischen Gerät 4 kann ein Authentifizierungstoken T bzw. ein Kryptochip enthalten sein, der mit dem Lesegerät 5 über eine Funkschnittstelle kommuniziert.

Bei dem Peer-to-Peer-Netzwerk 1 kann es sich beispielsweise um eine Internet-Tauschbörse handeln. Möchte der Anwender 3 an diesem Peer-to-Peer-Netzwerk 1 teilnehmen, startet er zunächst seinen anzumeldenden Client-Rechner 2-8 und bringt das plagiatgeschützte Produkt, beispielsweise die Handtasche 4, in Reichweite des an den Client-Rechner 2-8 angeschlossenen Lesegerätes 5. Eine auf dem Client-Rechner 2-8 ablaufende Software bzw. Peer-Software veranlasst das Aussenden einer Anfrage bzw. eines Requests an das Authentifizierungstoken T über die Funkschnittstelle. Das auf dem Kryptochip bzw. das auf dem Authentifizierungstoken T in einen zugangsgeschützten Speicher abgelegte Zertifikat Z wird von dem Authentifizierungstoken T an den anzumeldenden Client 2-8 übertragen.

Das digitale Zertifikat weist neben Attributen und Schlüsseln eine Signatur SIG auf. Die auf dem anzumeldenden Client 2-8 ablaufenden Peer-Software rechnet aus dem erfragten bzw. ausgelesenen Zertifikat des Authentifizierungstokens T eine Token-ID für den anzumeldenden Client 2-8, damit sich der anzumeldende Client-Rechner 2-8 mit dieser Knoten-ID bei dem Peer-to-Peer-Netzwerk anmelden kann. Die Knoten-ID des anzumeldenden Clients 2-8 wird mittels einer Ableitungsfunktion AF aus dem übertragenen Zertifikat Z berechnet. Anschließend wird die abgeleitete Knoten-ID über einen oder mehrere der in dem Peer-to-Peer-Netzwerk 1 bereits vorhandenen Client-Rechner als gültige Knoten-ID verifiziert oder, sofern die Verifizierung fehlschlägt, die ungültige Knoten-ID abgelehnt. Bei einer möglichen Ausführungsform berechnet die Peer-Software des anzumeldenden Client-Rechners 2-8 zunächst auf Basis des ausgelesenen Zertifikats Z eine zu verifizierende Knoten-ID, beispielsweise die Knoten-ID "15". Mit dieser vorläufigen Knoten-ID "15" kann sich der anzumeldende Client 2-8 versuchen in das Peer-to-Peer-Netzwerk 1 einfügen. Bei einer möglichen Ausführungsform kontaktiert der anzumeldende Peer-Client 2-8 diejenigen bereits im Peer-to-Peer-Netzwerk 1 vorhandenen Peer-Clients zwischen die sich der anzumeldende Client 2-8 einfügen muss. Bei dem in Figur 1 dargestellten Ausführungsbeispiel kontaktiert der anzumeldende Client 2-8 der bereits vorhandene Client-Rechner 2-1, 2-2 des Peer-to-Peer-Netzwerkes 1 da die zu verifizierende vom Zertifikat Z abgeleitete Knoten-ID "15" zwischen der Knoten-ID "10" des Client-Rechners 2-1 und der Knoten-ID "22" des Client-Rechners 2-2 liegt. Bei dieser Ausführungsform kontaktiert somit der anzumeldende Client-Rechner 2-8 zwei vorhandene Client-Rechner 2-1, 2-2 deren Knotenadresse der vorläufig berechneten Knoten-ID innerhalb des Netzwerkes 1 am nächsten liegen, wobei eine, nämlich die Knoten-ID "10" des Client-Rechners 2-1 unterhalb des berechneten Wertes der vorläufigen Knoten-ID "15" liegt und der andere Client-Rechner 2-2 eine Knoten-ID "22" aufweist, die über dem vorläufig berechneten Wert "15" der Knoten-ID des anzumeldenden Clients 2-8 liegt.

Bei einer alternativen Ausführungsform kontaktiert der anzumeldende Client-Rechner 2-8 lediglich einen vorhandenen Peer-Client des Peer-to-Peer-Netzwerkes 1, beispielsweise denjenigen, dessen Knoten-ID der vorläufig berechneten Knoten-ID am nächsten liegt und kleiner ist. Bei dieser Ausführungsform kontaktiert der anzumeldende Client-Rechner 2-8 in dem angegebenen Ausführungsbeispiel lediglich den Client-Rechner 2-1 des Peer-to-Peer-Netzwerkes 1.

Bei einer weiteren Ausführungsform kontaktiert der Client-Rechner 2-8 denjenigen vorhandenen Client-Rechner dessen Knoten-ID der berechneten Knoten-ID am nächsten liegt und dessen Knoten-ID größer ist als die vorläufig berechnete Knoten-ID. In dieser Ausführungsform kontaktiert der anzumeldende Client-Rechner 2-8 den Client-Rechner 2-2 in dem in Figur 1 angegebenen Ausführungsbeispiel.

Bei einer weiteren möglichen Ausführungsform kontaktiert der anzumeldende Client 2-8 mehrere Peer-Clients zur Verifizierung der vorläufig berechneten Knoten-ID, beispielsweise die Gruppe von Peer-Clients deren Knoten-ID in der Nähe des vorläufig berechneten Knoten-ID-Wertes liegt, beispielsweise die zwei nächsten darunterliegenden Knoten-IDs und diejenigen Client-Rechner mit den nächsten darüberliegenden Knoten-IDs. Beispielsweise kann der anzumeldende Client-Rechner 2-8 bei dieser Ausführungsform die vorhandenen Peer-Clients 2-1, 2-7 mit den Knoten-IDs "10" und "89", die im topologischen Ring links von der Einführungsstelle liegen, und die Peer-Clients 2-2, 2-3 mit den Knoten-IDs "22" und "41" die im topologischen Ring rechts von der Einfügungsstelle liegen, zur Verifizierung der vorläufigen Knoten-ID "15" kontaktieren.

Bei einer weiteren möglichen Ausführungsform kann der einzufügende bzw. anzumeldende Client-Rechner 2-8 auch alle in dem Peer-to-Peer-Netzwerk 1 bereits vorhandenen Client-Rechner 2-1 bis 2-7 zur Verifizierung der aus dem Zertifikat abgeleiteten Knoten-ID "15" kontaktieren.

Zur Verifizierung der abgeleiteten Knoten-ID durch die kontaktierten vorhandenen Peer-Clients des Peer-to-Peer-Netzwerkes 1 überträgt der anzumeldende Client 2-8 jedem zur Verifizierung kontaktierten vorhandenen Peer-Client 2-i die abgeleitete ID sowie das von dem Token T empfangene Zertifikat Z. Jeder durch den anzumeldenden Client-Rechner 2-8 zur Verifizierung der Knoten-ID kontaktierte vorhandene Client-Rechner 2-i innerhalb des Peer-to-Peer-Netzwerkes 1 prüft zunächst mittels eines Schlüssels einer Zertifizierungsinstanz, ob das weitergeleitete Zertifikat Z gültig ist. Weiterhin überprüft der kontaktierte vorhandene Client-Rechner, ob die von den anzumeldenden Client-Peer 2-8 übertragene vorläufige ID, beispielsweise die Knoten-ID "15" zu dem übertragenen Zertifikat Z passt, d. h. ob sich die Knoten-ID mittels der vorgegebenen Ableitungsfunktion AF aus dem Zertifikat Z ableiten lässt oder nicht. Sofern diese Prüfung bzw. dieser Check CHK des Zertifikates Z und der vorläufig berechneten Knoten-ID erfolgreich ist, sendet der verifizierende im Peer-to-Peer-Netzwerk bereits vorhandene Peer-Client 2-i eine Challenge C über den anzumeldenden Peer-Client 2-8 an das Authentifizierungs-Token bzw. den Kryptochip T, der an dem plagiatgeschützten Gegenstand 4 angebracht ist. Das Authentifizierungs-Token T berechnet mittels eines geheimen Schlüssels eine entsprechende Response R, die an das Lesegerät 5 des anzumeldenden Peer-Rechners 2-8 übertragen wird und von dort an den verifizierenden Peer-Client weitergeleitet wird, der die Challenge C gesendet hat. Der prüfende bzw. verifizierende Client-Rechner überprüft, ob die empfangene Response R zu der ausgesendeten Challenge C passt. Falls die Überprüfung der Response R erfolgreich ist, wird die vorläufige Knoten-ID des anzumeldenden Clients 2-8 als gültige Knoten-ID verifiziert bzw. akzeptiert. Wird der anzumeldende Client-Rechner 2-8 von allen kontaktierten vorhandenen Client-Rechnern des Peer-to-Peer-Netzwerkes 1 akzeptiert, wird er in das Peer-to-Peer-Netzwerk 1 als gleichberechtigter Peer-Client aufgenommen. Die abgeleitete Knoten-ID, beispielsweise die Knoten-ID "15" des anzumeldenden Clients 2-8 wird als gültig verifiziert, wenn mindestens eine von einem vorhandenen Client 2-i des Peer-to-Peer-Netzwerkes 1 generierte Challenge C, die über die Schnittstelle des durch die abgeleitete Knoten-ID "15" adressierten anzumeldenden Clients 2-8 an das Authentifizierungs-Token T gesendet wird, einer zugehörigen Response R entspricht, die der mindestens eine vorhandene verifizierende Client 2-i des Peer-to-Peer-Netzwerkes 1 über die Schnittstelle des durch die abgeleitete Knoten-ID adressierten anzumeldenden Clients 2-8 empfängt.

Die Knoten-ID, beispielsweise die Knoten-ID "15" wird durch den anzumeldenden Client 2-8 bzw. einer darauf ablaufenden Peer-Software von dem aus dem Ableitungs-Token T ausgelesenen digitalen Zertifikat Z mittels einer vorgegebenen Ableitungsfunktion AF abgeleitet. Bei der Ableitungsfunktion AF handelt es sich beispielsweise um eine Hash-Funktion H. Eine Möglichkeit bei einer möglichen Ausführungsform ist, dass dem anzumeldenden Client bzw. den anzumeldenden Clients sowie den vorhandenen Clients 2-i des Peer-to-Peer-Netzwerkes 1 eine gemeinsame Ableitungsfunktion AF bereitgestellt wird, die zur Verifizierung einer Knoten-ID des anzumeldenden Clients vorgesehen ist. Diese Ableitungsfunktion AF kann bei einer möglichen Ausführungsform in einem Speicher der jeweiligen vorhandenen Clients 2-i und des anzumeldenden Clients, beispielsweise des Clients 2-8, gespeichert sein. Bei einer möglichen Ausführungsform wird die auf dem anzumeldenden Client 2-8 auszuführende Peer-Software von einem Netzwerk durch den Client 2-8 vor der Anmeldung bei dem Peer-to-Peer-Netzwerk 1 heruntergeladen.

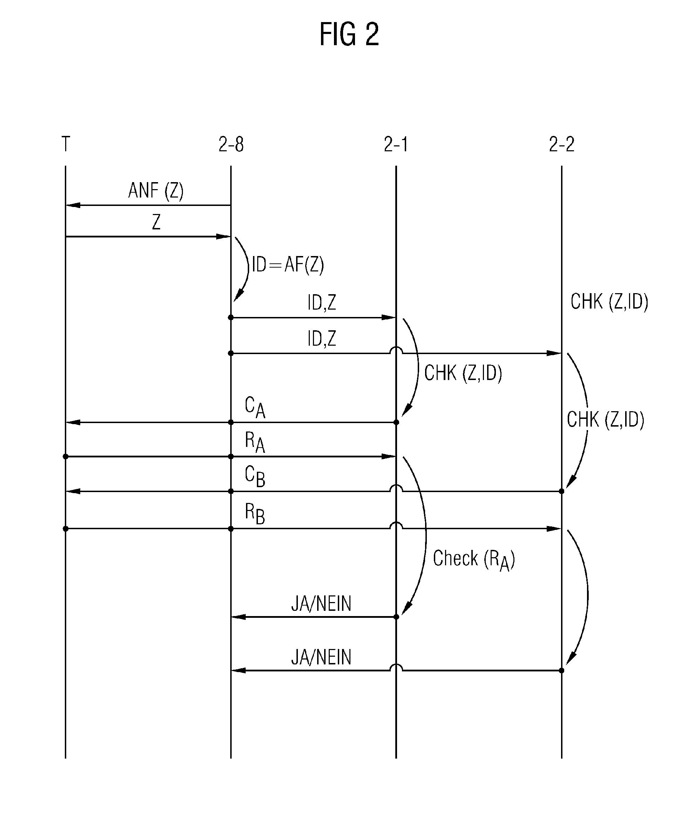

Figur 2 zeigt ein Signaldiagramm zur Darstellung einer möglichen Ausführungsform des erfindungsgemäßen Verfahrens und zum Bereitstellen einer gültigen Knoten-ID für einen bei einem Peer-to-Peer-Netzwerk 1 anzumeldenden Client.

Wie man aus Figur 2 erkennen kann, überträgt der anzumeldende Client 2-8 zunächst eine Anfrage ANF bzw. einen Request für das Zertifikat Z an das Authentifizierungs-Token T, welches sich in der Reichweite des Lesegerätes 5 befindet. Aus dem ausgelesenen digitalen Zertifikat Z ermittelt der anzumeldende Client 2-8 mittels einer Ableitungsfunktion AF zunächst eine Knoten-ID, die er für den anzumeldenden Client 2-8 berechnet. Diese Knoten-ID sowie das ausgelesene Zertifikat Z werden anschließend bezüglich ihrer Knoten-ID benachbarten Peer-Clients 2-1, 2-2 übergeben. Die kontaktierten vorhandenen Peer-Client 2-1, 2-2 prüfen die Gültigkeit des empfangenen Zertifikates Z mittels eines öffentlichen von einer Zertifizierungsinstanz ZA zur Verfügung gestellten Schlüssels und prüfen weiterhin mittels einer Ableitungsfunktion AF, insbesondere einer Hash-Funktion H, ob die empfangene Knoten-ID sich mittels der vorhandenen Ableitungsfunktion AF aus dem übertragenen Zertifikat Z ableiten lässt. Ist sowohl das Zertifikat Z als auch die übertragene Knoten-ID gültig, generieren die beiden kontaktieren verifizierenden Peer-Clients 2-1, 2-2 jeweils eine Challenge C_{A}, C_{B} und übertragen diese über den anzumeldenden Client-Rechner 2-8 an das Authentifizierungs-Token T. Anschließend wird überprüft, ob die zurückgesendete Response R_{A}, R_{B} zu der ausgesendeten Challenge C_{A}, C_{B} passt. Ist dies der Fall, wird die Knoten-ID des anzumeldenden Rechner 2-8 als gültig akzeptiert und der Client-Rechner 2-8 als Peer-Client in das Peer-to-Peer-Netzwerk 1 eingefügt.

Bei dem erfindungsgemäßen Verfahren wird die Authentifizierungsprüfung von plagiatgeschützten Gegenständen zur Ableitung einer Knoten-ID für das Peer-to-Peer-Netzwerk 1 verwendet. Das erfindungsgemäße Verfahren ermöglicht es, den Adressraum möglicher Knoten-IDs, welche ein Anwender bzw. sein Gerät in einem Peer-to-Peer-Netzwerk 1 belegen kann, zu beschränken. Der Anwender 3 kann nur noch so viele verschiedene Knoten-IDs erzeugen, wie er geeignete Produkte mit passendem Plagiatschutz besitzt. Ein weiterer Vorteil des erfindungsgemäßen Verfahrens besteht darin, dass keine zusätzliche Sicherheitsinfrastruktur notwendig wird, da Zertifikate Z für den Plagiatschutz von beliebigen Produkten verwendet werden können. Das erfindungsgemäße Verfahren eignet sich prinzipiell für alle Plagiatschutzzertifikate Z, die eindeutig einem einzelnen Gegenstand bzw. Produkt zugeordnet sind, da der gemeinsame Schlüssel einzigartig ist.

## Patentansprüche

1. Verfahren zum Bereitstellen mindestens einer gültigen Knoten-ID für einen bei einem Peer-to-Peer-Netzwerk (1) anzumeldenden Client (2-8),
wobei von einem Zertifikat (Z), das über eine Schnittstelle des anzumeldenden Clients aus einem Authentifizierungs-Token (T) ausgelesen wird, eine Knoten-ID des anzumeldenden Clients (2-8) abgeleitet wird, die von einem oder mehreren der in dem Peer-to-Peer-Netzwerk (1) vorhandenen Clients (2-1, 2-2) als gültige Knoten-ID verifiziert wird.

2. Verfahren nach Anspruch 1,
wobei die abgeleitete Knoten-ID des anzumeldenden Clients (2-8) als gültig verifiziert wird, falls eine von mindestens einem vorhandenen Client (2-1, 2-2) des Peer-to-Peer-Netzwerkes (1) generierte Challenge (C_{A}, C_{B}), die über die Schnittstelle des durch die abgeleitete Knoten-ID adressierten anzumeldenden Clients (2-8) an das Authentifizierungs-Token (T) gesendet wird, einer zugehörigen Response (R_{A}, R_{B}) entspricht, die der mindestens eine vorhandene Client (2-1, 2-2) über die Schnittstelle des durch die abgeleitete Knoten-ID adressierten anzumeldenden Clients (2-8) empfängt.

3. Verfahren nach Anspruch 1 oder 2,
wobei die Knoten-ID durch den anzumeldenden Client (2-8) von dem aus dem Ableitungs-Token (T) ausgelesenen Zertifikat (Z) mittels einer vorgegebenen Ableitungsfunktion (AF) abgeleitet wird.

4. Verfahren nach Anspruch 1 bis 3,
wobei der anzumeldende Client (2-8) die abgeleitete Knoten-ID zusammen mit dem aus dem Authentifizierungs-Token (T) ausgelesenen Zertifikat (Z) an den mindestens einen bereits in dem Peer-to-Peer-Netzwerk vorhandenen Client (2-1, 2-2) zur Verifizierung der abgeleiteten Knoten-ID überträgt.

5. Verfahren nach Anspruch 4,
wobei der vorhandene Client (2-1, 2-2) zunächst eine Signatur (SIG) des übertragenen Zertifikates (Z) mittels eines öffentlichen Schlüssels (K_{pubCA}) einer Zertifizierungsinstanz zur Verifizierung des Zertifikates (Z) überprüft und anschließend eine Knoten-ID (ID') mittels der vorgegebenen Ableitungsfunktion (AF) von dem verifizierten Zertifikat (Z) ableitet und mit der von dem anzumeldenden Client (2-8) übertragenen Knoten-ID vergleicht und die übertragene Knoten-ID als gültige Knoten-ID verifiziert, falls die übertragene Knoten-ID mit der durch den vorhandenen Client (2-1, 2-2) selbst abgeleiteten Knoten-ID übereinstimmt.

6. Verfahren nach Anspruch 3 bis 5,
wobei die Ableitungsfunktion (AF) durch eine Hash-Funktion (H) gebildet wird.

7. Verfahren nach Anspruch 6,
wobei einem anzumeldenden Clients (2-8) und den vorhandenen Clients (2-i) des Peer-to-Peer-Netzwerkes (1) eine gemeinsame Ableitungsfunktion (AF) zur Verifizierung einer Knoten-ID des anzumeldenden Clients (2-8) bereitgestellt wird.

8. Peer-to-Peer-Netzwerk (1), das einen oder mehrere Clients (2-i) aufweist,
wobei zur Erweiterung des Peer-to-Peer-Netzwerkes (1) um einen weiteren Client (2-8) diesem anzumeldenden Client mindestens eine gültige Knoten-ID für das Peer-to-Peer-Netzwerk (1) bereitgestellt wird, indem eine Knoten-ID von einem Zertifikat (Z), welches über eine drahtlose oder drahtgebundene Schnittstelle des anzumeldenden Clients (2-8) aus einem Authentifizierungs-Token (T) ausgelesen wird, abgeleitet wird und von dem einen oder mehreren in dem Peer-to-Peer-Netzwerk (1) vorhandenen Clients als gültig verifiziert wird.

9. Peer-to-Peer-Netzwerk nach Anspruch 8,
wobei das Authentifizierungs-Token (T) ein RFID-Token oder ein Plagiatschutz-Token ist.

10. Peer-to-Peer-Netzwerk nach Anspruch 8 oder 9,
wobei die Knoten-ID mittels einer Ableitungsfunktion (AF) abgeleitet wird, die in einem Speicher der jeweiligen vorhandenen Clients und anzumeldenden Clients gespeichert ist.

11. Peer-to-Peer-Netzwerk nach Anspruch 10,
wobei das Authentifizierungs-Token (T) an einem plagiatgeschützten Gegenstand angebracht oder darin integriert ist.

12. Peer-to-Peer-Netzwerk nach Anspruch 8 bis 11,
wobei die Clients des Peer-to-Peer-Netzwerkes (1) mobile Clients, insbesondere Laptops, PDA und Mobiltelefone, sowie immobile Clients, insbesondere Computer und Festtelefone aufweisen.

13. Computerprogramm mit Programmbefehlen zur Durchführung des Verfahrens nach Anspruch 1 bis 7.

14. Datenträger, der das Computerprogramm nach Anspruch 13 speichert.
